**Europäisches Patentamt**

**European Patent Office**

**Office européen des brevets**

(19)

(11) Publication number : **0 464 914 B1**

# EUROPEAN PATENT SPECIFICATION

(12)

(45) Date of publication of patent specification :
04.05.94 Bulletin 94/18

(51) Int. Cl.⁵ : **A23L 1/221,** A23L 1/226

(21) Application number : **91201597.1**

(22) Date of filing : **21.06.91**

(54) **Use of edible oil for flavouring foodstuffs.**

(30) Priority : **02.07.90 EP 90201770**

(43) Date of publication of application :
**08.01.92 Bulletin 92/02**

(45) Publication of the grant of the patent :
**04.05.94 Bulletin 94/18**

(84) Designated Contracting States :
**AT BE CH DE DK ES FR GB GR IT LI NL SE**

(56) References cited :
**EP-A- 0 059 997**
**EP-A- 0 321 055**
**EP-A- 0 321 056**
**FR-A- 1 588 720**
**GB-A- 932 347**
**US-A- 4 169 901**
**P.MONTAGNE :**"Nouveau Larousse Gas-
tronomique" 1981 Larousse,Paris,Fran-
ce,pages 518,599,600,941.
**JOURNAL OF THE AMERICAN OIL CHEMISTS'**
**SOCIETY.** vol. 42, no. 10, October 1965, CHAM-
PAIGN US pages 857 - 861; G.JURRIENS et al.:
"Determination of Hydroxy-Acid Triglycerides
and Lactones in Butter"

(73) Proprietor : **UNILEVER N.V.**
**Weena 455**
**NL-3013 AL Rotterdam (NL)**
(84) **BE CH DE DK ES FR GR IT LI NL SE AT**
Proprietor : **UNILEVER PLC**
**Unilever House Blackfriars P.O. Box 68**
**London EC4P 4BQ (GB)**
(84) **GB**

(72) Inventor : **Haring, Petrus Gerardus M. Unilever**
**Research**
**Vlaardingen Laboratory Olivier van Noortlaan**
**120**
**NL-3133 AT Vlaardingen (NL)**
Inventor : **Ringers, Hendrik Johan Unilever**
**Research**
**Vlaardingen Laboratory Olivier van Noortlaan**
**120**
**NL-3133 AT Vlaardingen (NL)**

(74) Representative : **Hartong, Richard Leroy et al**
**Unilever N.V. Patent Division P.O. Box 137**
**NL-3130 AC Vlaardingen (NL)**

## Description

The present invention relates to the use of edible oil for flavouring foodstuffs.

European patent application 321056 describes the use of a distillate of edible oils for flavouring foodstuffs. The distillate contains a high concentration of lactones of $C_6$-$C_{20}$, particularly $C_8$-$C_{12}$, hydroxy fatty acids. European patent application 321055 describes the use of an extract of fats such as butter oil for flavouring foodstuffs. The extract is enriched in $C_{10}$ and $C_{12}$ hydroxy fatty acid lactones. Such lactones have been known for many years to be important flavouring ingredients, for example for butter (see J.A.O.C.S. 42, 857-861 (1965)).

US patent 4,169,901 describes the use of an undeodorised edible oil, such as coconut oil, as a stabilizing agent in a deep-frying fat composition, which composition further contains a base fat and an artificial meat flavour. The stabilizing agent serves to prolong the delivery of the meat flavour to the deep-fried foodstuffs, and is not intended to impart a flavour to the foodstuffs.

Although the concentrates of lactones from edible oils such as described in the above-mentioned European applications are suitable for flavouring foodstuffs, the cost of producing these concentrates is still much higher than that of synthetic flavours and their production capacity is below the total potential market for flavours of natural origin.

It has been found now that edible oils which contain a level of $C_6$-$C_{20}$ lactones of 20-300 ppm can be used for flavouring foodstuffs without refining. The oils contain no more than 2% of free fatty acids.

According to the present invention, foodstuffs are to be understood as those which can be consumed directly, i.e. without cooking, frying or other preparation. Examples of such foodstuffs are margarin and other spreads, bakery products, ice-cream, soups and deserts. The use according to the invention is particularly advantageous for flavouring foodstuffs based on fat or associated with fat, for which a butter-like aroma is desirable.

For the purpose of the present invention, the term lactones is understood to comprise γ- and δ-lactones, i.e. 4- and 5-alkanolides and 4- and 5-alkenolides, having a saturated or unsaturated hydrocarbon side chain of 1-14 carbon atoms. Among these $C_6$-$C_{20}$ γ- and δ-lactones, the δ-lactones are preferred. When a butter-like aroma is desired, $C_8$-$C_{12}$ lactones are particularly useful as flavouring constituents.

The unrefined edible oil which is used according to the invention is understood to be a non-bleached, non-deodorised edible oil, which is preferably not neutralised either. Preferred oils are the so-called lauric fats, i.e. fats containing more than 30% of $C_{10}$-$C_{14}$ fatty acids, such as coconut oil, palm-kernel oil and babassu oil. Coconut oil is particularly preferred. When coconut oil is used, it is preferably derived from fresh coconut meats or from carefully prepared copra. Preparation is performed in such a way as to keep the content of polycyclic aromatic hydrocarbons at a low level, and to obtain a low concentration of free fatty acids. The oil is preferably obtained by mechanical means, such as pressing. If necessary, the oil can be filtered in order to remove any unwanted solids. A method of preparing copra which is suitable as a source of coconut oil for use according to the invention is described e.g. in Chemisch Weekblad, 46, 1-11 (1950).

The composition of edible oils depends on the origin of the oil. For example, coconut oil contains a free fatty acid concentration varying over a wide range, from about 0.01 to 5% by weight. Free fatty acids normally have an adverse effect on the flavouring properties of the oil, in that they add a somewhat unpleasant, astringent or even soapy taste to the flavoured foodstuff. Based on the evaluation by tasting, it is therefore preferred that the free fatty acid (ffa) content of the edible oil is below 2% by weight. More preferably, the ffa content is below 1% by weight. The $C_6$-$C_{20}$ lactone content of unrefined oil is in the range from 20 to 300 ppm by weight. It is desirable that the ratio of lactone content to the ffa content of the oil is at least 1:100, preferably at least 1:30 and in particular at least 1:10, in order to achieve a suitable flavouring effect.

The edible oil used according to the invention may contain other minor flavour components that are naturally present, such as methyl ketones. The presence of such other components may even serve to round off the aroma of the foodstuff.

The edible oil is added to the foodstuff in an amount that is sufficient to provide the desired flavouring effect. In particular, the edible oil is added in an amount that causes the foodstuff to contain about 0.5 to 20 ppm, e.g. about 2 ppm of lactones. Depending on the composition and in particular the lactone composition of the oil, this means that the oil is preferably used in an amount of up to 5% by weight, more preferably about 0.1-2.0% by weight with reference to the total weight of the flavoured foodstuff.

According to the invention, the unrefined edible oil can be used in combination with other aroma compounds and/or aroma concentrates, since in that way a better attuned aroma may be obtained. If, for example, an unrefined coconut oil is used to impart a butter aroma to spreads, it is advisable to combine the oil with other butter aroma compounds, such as diacetyl, dimethyl sulphide, methyl ketones, cis-4-heptenal, etc.

Example 1

Unrefined coconut oil was added to a 80% fat spread. The fat phase was a standard fat phase containing the usual ingredients (0.2% lecithine derivatives, 0.2% commercial mono-diglycerides derived from hardened palm oil, 4 ppm β-carotene); the water phase had a pH of 4.9 (acidified with lactic acid) and contained 0.3% salt and 0.5% skimmed milk powder. The origin of the coconut oil, its free fatty acid (ffa) content and the amount of oil added to the spread are given in Table I. The products were evaluated by 7 persons. The results are summarised in Table I.

## Table I

| | ---- Coconut oil ----- | | | Evaluation |
|---|---|---|---|---|
| | origin | ffa content | amount added | |
| 0 | | | none | neutral |
| 1 | Ceylon | 1.05% | 0.5% | neutral, light coconut, fatty acid taste |
| 2 | Ceylon | 1.05% | 1.0% | sweet coconut with slight off-taste |
| 3 | Samoa | 2.8% | 0.5% | crude coconut oil taste; rejected |
| 4 | Samoa | 2.8% | 1.0% | distinctly unpleasant smell |
| 5 | Solomon Islands | 0.08% | 0.5% | mild, attractive flavour |
| 6 | Solomon Islands | 0.08% | 1.0% | lactone-like, sweet, coconut flavour, no off-taste |

When conventional butter flavour concentrates, not containing lactones, are included in the spread in addition to the unrefined coconut oil, a pleasant creamy, butter-like flavour is achieved.

Example 2

Using the same base fat as in Example 1, four samples were prepared, one of which did not contain added flavour (blank). The other three were flavoured with a natural flavour (NF) without lactones (but containing fatty acids, methyl ketones, diacetyl and acetic acid). To two of these, unrefined coconut oil originating from India was added. The free fatty acid (ffa) content of the coconut oil and the amount of oil added to the spread are given in Table II. The products were evaluated by 5 persons. The results are summarised in Table II.

## Table II

| | NF | Coconut oil | | Relative evaluation |
| --- | --- | --- | --- | --- |
| | | ffa content | amount added | |
| 0 | none | none | | bland taste |
| 1 | yes | none | | accepted |
| 2 | yes | 0.7% | 0.5% | appreciated |
| 3 | yes | 0.7% | 1.0% | highly appreciated |

Example 3

Unrefined coconut oil with an FFA of 0.13% (originating from the Solomon Islands) was used in a non-dairy cream which had the following composition: milk powder 7%, guar gum 0.07%, locust bean gum 0.03%, Tween (TM) 0.35%, refined coconut oil 20%, unrefined coconut oil (ex-Solomon Islands) 0.3%, refined palm-kernel oil (hardened to a melting point of 38°C) 12%, Hymono-3202 (emulsifier) (TM) 0.05%, $\beta$-carotene 0.002% and water to 100%. A similar product was produced without unrefined coconut oil from the Solomon Islands. The processing was performed by mixing the ingredients at 60°C for 30 minutes. Sterilisation was performed at 146°C for about 3 seconds before flash cooling in a vacuum chamber at 0.6 bar. Aseptic homogenisation and final cooling were according to normal practice.

When comparison was made between the two products in a non-trained panel of 15 persons, the product with unrefined coconut oil was found by 11 persons to have a clear pleasant creamy flavour as compared with the product without unrefined coconut oil. Four persons did not have a preference for either one or the other.

## Claims

1.    Use of an edible oil containing $C_6$-$C_{20}$ lactones for flavouring foodstuffs with a butter-like flavour, characterised by using an unrefined edible oil which contains 20-300 ppm of $C_6$-$C_{20}$ lactones and which contains no more than 2% by weight of free fatty acids.

2.    Use according to claim 1, wherein the edible oil is based on a lauric fat.

3.    Use according to claim 2, wherein the edible oil is coconut oil.

4.    Use according to any of claims 1-3, wherein the edible oil contains no more than 1% by weight of free fatty acids.

5.    Use according to any of claims 1-4, wherein the edible oil has a weight ratio of lactones to free fatty acids of at least 1:10.

6.    Use according to any of claims 1-5, wherein the edible oil is used in an amount of up to 2.0% by weight of the foodstuff.

7.    Use according to any of claims 1-6 for flavouring spreads.

8.    Food product flavoured with 0.1-2.0 % by weight, with respect to the total weight of the flavoured foodstuff, of an unrefined edible oil as defined in any of claims 1-7.

4

EP 0 464 914 B1

**Patentansprüche**

1. Verwendung eines $C_6$-$C_{20}$-Lactone enthaltenden Speiseöles zum Aromatisieren von Nahrungsmitteln mit einem butterartigen Aroma, dadurch gekennzeichnet, daß man ein unraffiniertes Speiseöl verwendet, das 20 bis 300 ppm $C_6$-$C_{20}$-Lactone und nicht mehr als 2 Gew.-% freie Fettsäuren enthält.

2. Verwendung nach Anspruch 1, bei der das Speiseöl auf einem Laurinfett basiert.

3. Verwendung nach Anspruch 2, bei der das Speiseöl Kokosnußöl ist.

4. Verwendung nach irgendeinem der Ansprüche 1 bis 3, bei der das Speiseöl nicht mehr als 1 Gew.-% freie Fettsäuren enthält.

5. Verwendung nach irgendeinem der Ansprüche 1 bis 4, bei der das Speiseöl ein Gewichtsverhältis der Lactone zu den freien Fettsäuren von mindestens 1:10 hat.

6. Verwendung nach irgendeinem der Ansprüche 1 bis 5, bei der das Speiseöl in einer Menge von bis zu 2,0 Gew.-% des Nahrungsmittels verwendet wird.

7. Verwendung nach irgendeinem der Ansprüche 1 bis 6 zum Aromatisieren von Brotaufstrichen.

8. Nahrungsmittelprodukt, das mit 0,1 bis 2,0 Gew.-%, bezogen auf das Gesamtgewicht des aromatisierten Nahrungsmittels, eines unraffinierten Speiseöles, wie es in irgendeinem der Ansprüche 1 bis 7 definiert ist, aromatisiert ist.


**Revendications**

1. Utilisation d'une huile comestible contenant des lactones en $C_{6-20}$ pour aromatiser des aliments par un arôme analogue à celui du beurre, caractérisée en ce qu'on utilise une huile comestible non raffinée qui contient de 20 à 300 ppm de lactones en $C_{6-20}$ et qui ne contient pas plus de 2% en poids d'acides gras libres.

2. Utilisation selon la revendication 1, dans laquelle l'huile comestible est à base d'une graisse laurique.

3. Utilisation selon la revendication 2, dans laquelle l'huile comestible est l'huile de coprah.

4. Utilisation selon l'une quelconque des revendications 1 à 3, dans laquelle l'huile comestible ne contient pas plus de 1% en poids d'acides gras libres.

5. Utilisation selon l'une quelconque des revendications 1 à 4, dans laquelle l'huile comestible présente un rapport pondéral des lactones aux acides gras libres d'au moins 1:10.

6. Utilisation selon l'une quelconque des revendications 1 à 5, dans laquelle l'huile comestible est utilisée à raison d'un maximum de 2,0% en poids de l'aliment.

7. Utilisation selon l'une quelconque des revendications 1 à 6, pour aromatiser les produits à tartiner.

8. Produit alimentaire aromatisé avec 0,1 à 2,0% en poids, par rapport au poids total du produit alimentaire aromatisé, d'une huile comestible non raffinée telle que définie dans l'une quelconque des revendications 1 à 7.

5